# EUROPEAN PATENT APPLICATION

(11) **EP 1 364 688 A2**
(43) Date of publication of application: **26.11.2003**
(21) Application number: 02025259.9
(22) Date of filing: 13.11.2002
(51) Int. Cl.: A63F 13/02

(54) **TV/Video signal receiver for palm-sized computer game machine**

(30) Priority: 21.05.2002 CN 02236196 U
(71) Applicant: Bio Express Inc., Shatin, Hong Kong (CN)
(72) Inventor: Leung, Yiuchoi Flat A3, Hong Kong Special Administrative Region (CN)
(74) Representative: Grosse, Wolf-Dietrich, Dipl.-Ing.

(57) **Abstract**

In the software carrier of a palm-sized computer game machine is added a TV tuner, a multi-system video signal decoder and converter circuit, a high-speed memory, an external video and audio input port and a group of audio selectors plus loudspeakers and earphone output means. Under the control of a software, the TV tuner converts the TV signals received into video and audio signals, and the multi-system video signal decoder and converter circuit decodes and converts the video signals input from the TV tuner or external input port into digital image data and store temporally into a high-speed memory, which are then transferred to the storage /storage area for display of a palm-sized computer game machine by using a fast transferring means such as a direct memory access, and the audio signal output from the TV tuner or the audio signal input from an external input port are transferred to output devices such as loudspeaker or external earphones, thus a palm-sized computer game machine will become a portable TV and video signal receiver.

## Description

### Technical Field of the Invention

This invention relates to a computer game system, in particular, to a TV and video signal receiver for a palm-sized computer game machine.

### Background Art

Thanks to the fierce competition and increasing demand, modern palm-sized computer game machine has been improved remarkably in system performance and display ability over the past years. In the past, palm-sized computer game machine was of white-black display, had a low expression ability for full picture (for example only 160 dots in horizontal direction and 144 lines in vertical direction), a low speed of system clock and CPU operation (say 4M for system clock and 1M for CPU, operating 200,000-300,000 8-bit instructions per second), and a low speed of direct memory access (DMA) (say only one million bites per second), which affects the expression ability and effect of the games; whereas the modern palm-sized computer game machine itself has a color screen display, and its number of colors and definition in entire picture have reached a high level (for example, 32768 colors available at any spot, definition of 240 X 160 on the whole screen). The speed of CPU and system performance have improved greatly (for example, clock 16M, CPU 8M, operating 8 million 16-bit or 32-bit instructions per second). Thus the game machine has made a remarkable progress in its expression ability and multimedia effect.

In the modern color palm-sized computer game machine, users are no longer satisfied with the single purpose of playing games, they are eager to have more auxiliaries and software for their entertainment other than playing games, for example, in many internets, there is a voting mechanism for the internet-mates airing their views. Once a unanimous result for the most expected product of the famous color palm-sized computer game machine through voting in internet is obtained from different websites.

The most expected is a color TV and video signal receiver used in the palm-sized computer game machine, that is to say, color TV or video picture signals received from TV and video signal receiver are sent real-time to the display screen of a palm-sized computer game machine via circuit conversion or with the aid of software and hardware, and plus the sound by a loudspeaker, thus making a palm-type TV and video signal receiver.

In fact, color palm-sized computer game machine plus color TV and video signal receiver appeared in mid nineties of the 20^{th} century, unfortunately, it had no practicability and was enjoyed by few people so that production was suspended. A TV and video signal receiver can be realized easily (because the palm-sized computer game machine has arranged in advance an audio/video (A/V) input connection point of analog system in the game software carrier - slot for game card), just connecting A/V output of the TV receiver circuit to the pre-arranged input point in the slot for the game card, with the game machine taken as a monitor. However, such a game machine was not accepted in the market and came to an end due to its low resolution and definition, large power consumption, high price and large volume.

Subsequent palm-sized computer game machine, though its color model was accepted in the market in a certain extent, still cannot compare with its counterpart - black/white model due to its large volume, high power consumption and high price. The black/white game machine features low price, small volume and little power consumption (for the color ones, 4AA batteries operate one to two hours, whereas for black/white ones, 2AA batteries operate 20 hours), and has already had over 1000 styles of games.

Now, this model of small volume, low price and little power consumption has developed to color model, and has improved from several to hundreds of times in color display ability on entire picture, system efficiency and CPU speed, and still has the advantages of low power consumption, low price and small volume, expediting the generation of a low-priced and high-performance color TV and video signal receiver attached to a game machine.

Since there is no input point pre-arranged for A/V signal in the present palm-sized computer game machine, and there is only a slot for a computer game machine software carrier (game card) to be inserted; in this slot, there are only the address of the system, data and control bus connection points without direct control connection line for liquid crystal display (LCD) screen display circuit, so it is difficult to display the real-time TV picture by using the liquid crystal display screen of a palm-sized computer game machine.

### Summary of the Invention

In order to solve the above problems, an object of this invention is to provide a color TV and video signal receiver. A game card is inserted into the palm-sized computer game machine, the color TV or external input video picture signal received is converted from the analog signal of the picture to digital image data by a TV signal decoder circuit, is stored temporally in a high-speed static memory, then is sent in fast DMA manner to the memory of the palm-sized computer game machine, finally the above digital picture data is sent to the memory for the LCD of the palm-sized computer game machine once again in fast DMA manner synchronized with each field and horizontal line. The above processes repeat periodically. The user can watch smooth color TV programs or external input video pictures from the LCD screen borne on the palm-sized computer game machine, and the palm-sized computer game machine, adding a loudspeaker or earphone for outputting audio signal, will become a portable TV and video signal receiver for handy use.

Another object of this invention is to provide a computer game machine employing a color TV and video signal receiver for use in the above palm-sized computer game machine.

The computer game machine of this invention, comprising:
(a) a computer game machine having a display screen;
(b)a software carrier of the computer game machine - a game card, provided therein a group of color TV receiver, converter and transmitter circuit.

### Brief Description of Drawings

Figure 1 shows a block view of the circuit for a palm-sized computer game system of the prior art;
Figure 2 shows a block view of the circuit for a palm-sized computer game system of an example according to this invention;
Figures 3A and 3B show the detailed circuit diagrams of a palm-sized computer game system according to this invention.

### Description of Preferred Embediments

Now examples of the invention will be described with reference to the drawings.

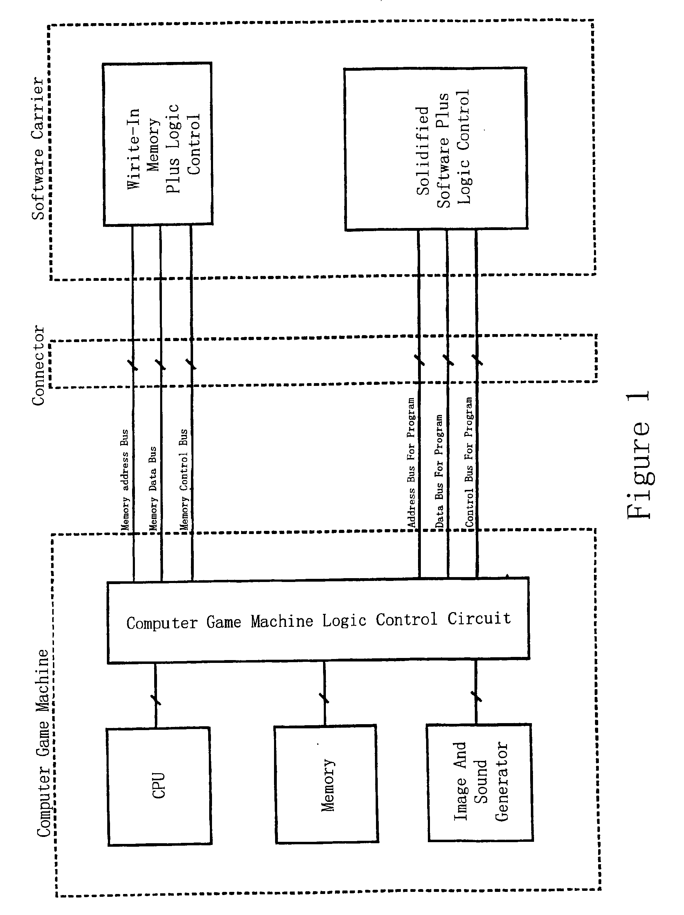

Referring to figure 1, various signal lines of the solidified software and integrated logic control devices in the game card are directly connected to corresponding signal leads of the palm-sized computer game machine by connectors (connection slots).

The computer game machine in figure 1 comprises a CPU, a memory, an image and sound generator, each of these devices being connected to the logic control circuits of the computer game machine. On the other hand, the logic control circuits of the computer game machine are connected to connectors (connection slots) via the memory address bus, data bus, control bus and address bus for program.

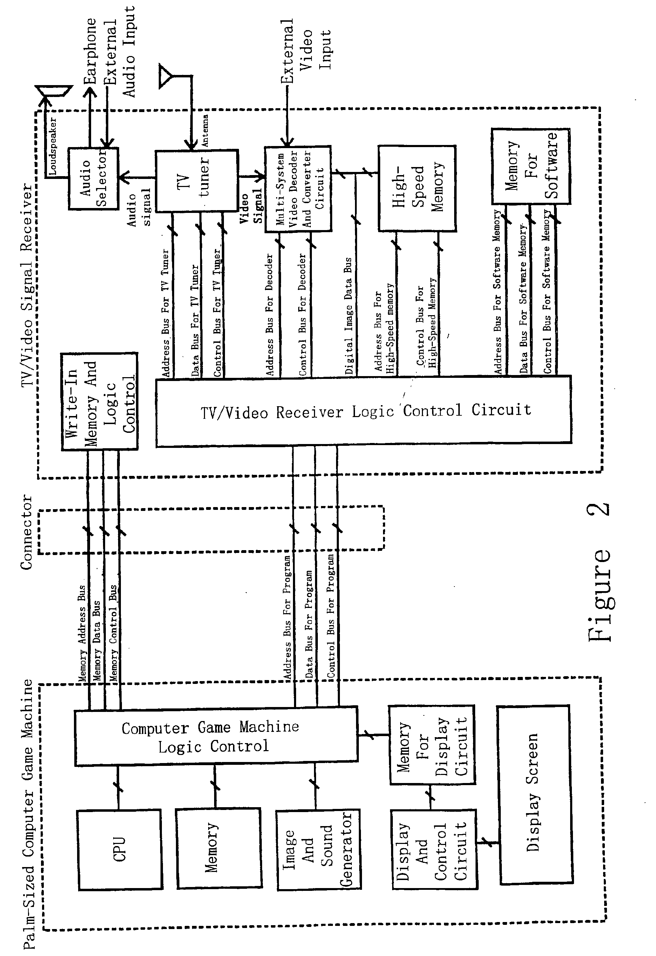

Referring to figure 2, the logic control circuit of a TV and video signal receiver is located between the memory for storing solidified software and various signal lines of the palm-sized computer game machine (or simplified as game machine). The memory for storing software appears at space of the designated address of the game machine bus so that the control software of the TV receiver can perform normally, the high-speed memory in figure 2 appears at another address space of the game machine bus, thus facilitating the high-speed transmission of TV picture data captured towards the internal memory of the game machine. In figure 2, there is also a standard element - TV tuner, which controlled by a switch, connects the TV signal to the TV tuner via stretchable antennas or a central receiving antennas in a building connected by commuting cable. The above logic control circuit connects this TV tuner in address, data and control bus, thus the solidified software can access the TV tuner at an address space of the game machine and operates it in corresponding flow chart, thus making the first step of the TV reception capture the picture and sound signal from the TV station (in this stage, the design is based on analog system). Referring once more to figure 2, a multi-system video signal decoder and converter (hereinafter referred to as decoder) is also connected to the above logic circuit in address, data and control bus. This decoder may have a several groups of video signal input port, decoding video signal of an input port is selected by respective command and controlling procedures so that the original analog format signal comprising field (V), horizontal line (H), color modulation (COLOR) and image signals are exactly derived as a digitized video data at each displayed spot which is displayed in a picture of the game machine easily (During the derivation, of course, the image resolutions should match with that of an entire picture displayed by the game machine). Finally, in figure 2, there is another group of audio selection switches, through which either of the audio signal output by TV tuner or audio signal input externally (corresponding video 2,... video n) is selectively output to loudspeaker or earphone.

For TV pictures, each frame of pictures is synthesized from pictures of even and odd fields, odd field having only odd scanning line display and similarly even field having only even scanning line display. If in the resolution of the entire picture display of the game machine in this example, the number of the horizontal line H is less than half of the TV picture horizontal line H, the game machine can process in the way as the single high-speed memory as shown in figure 2. Since the total number of the horizontal lines (H) for the game machine entire picture is less than half of the TV pictures received (PAL system 625 lines, NTSC system 525 lines), half of the number of lines can be given up, only the other half will be enough, i.e., only the odd field of pictures or even field of pictures is needed. When Nth field of pictures come up, the decoder will capture the entire picture data and convert into digital information and then store into the high-speed memory; when N+1th field come up, the logic control circuit will send quickly (usually in DMA mode) the data in high-speed memory to the internal memory of the game machine for temporal storage under the control of solidified software; when N+2th field comes up, besides repeating the above decode capturing process, at the same time, by using the fast transferring within the game machine (Hsync DMA mode), after each horizontal line displayed in the game machine, the content in this horizontal line is renewed in DMA mode so that it can be displayed out at the next field of display time (since for the game machine, most of the horizontal lines are less than half of 525 lines, thus, actually odd and even fields display the same content of the entire horizontal lines), thus repeating periodically, and the TV pictures will be continuously displayed on the game machine screen. Of course, only the content of odd field or even field is displayed, the resolution of display pictures cannot reach the total horizontal lines as required by TV system -this is just the trade-off between cost and effect for portable liquid crystal display TV receivers practiced by many manufacturers.

By accompanying sound selection circuit and adding loudspeaker or earphone, the video and audio signal received by the modulator or that output externally can be played completely and in fidelity.

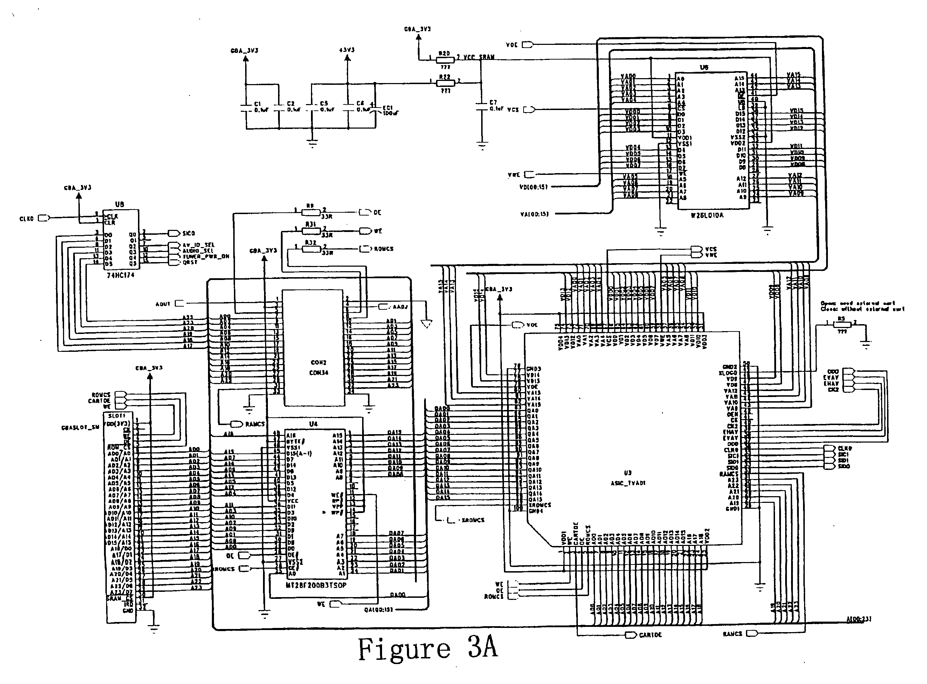

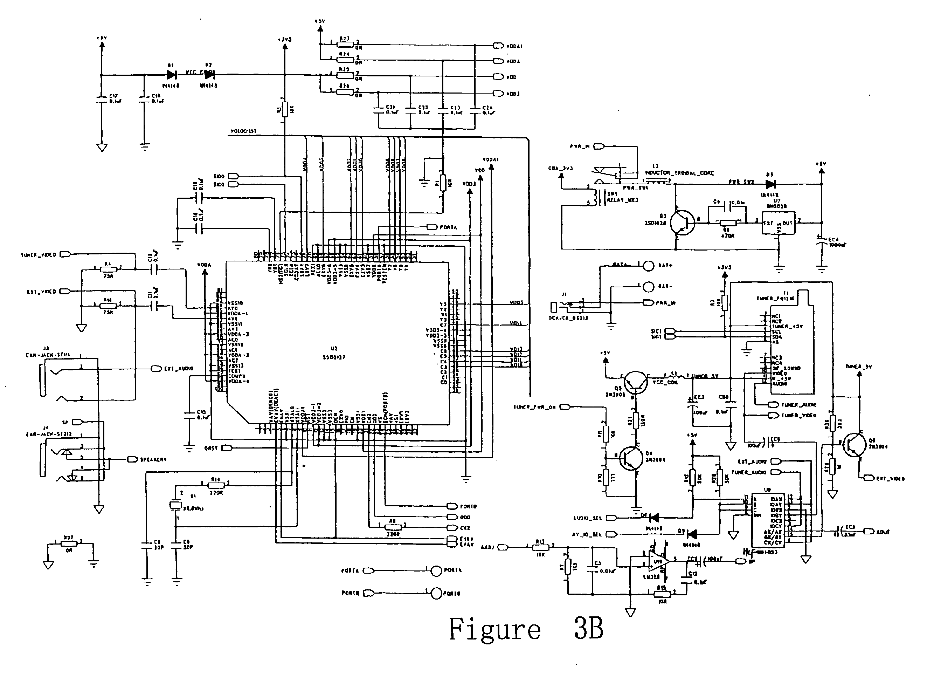

Figures 3A and 3B show detailed circuit diagrams of a palm-sized computer game system according to this invention.

Although the best mode for carrying out this invention is described above, this invention is not limited to the above examples. For persons skilled in the art, various modifications can be made to this invention without departing the concept and spirit of this invention. Therefore, the protection scopes of this invention are defined by the claims.

## Claims

1. A computer game machine system, comprising:
1) a computer game machine;
2) a TV and video signal receiver for said computer game machine;
said TV and video signal receiver including:
(1) a TV tuner, connected to an antenna;
(2) one or more external video and audio input ports;
(3) a multi-system video signal decoder and converter circuit, which can convert selectively multiple different systems of video signals transmitted from the above TV tuner or above external video input port, into digital image data, and then output these image data according to the resolution provided by the control parameter;
(4) a audio selector, which can output the audio signals transmitted from the above TV tuner or above external audio input port into a loudspeaker or external earphone;
(5) a high-speed memory for storing temporally the digital image data output by the above multi-system video signal decoder and converter circuit;
(6) a memory for storing control software;
(7) a logic control circuit, on the one hand, connecting to the address bus, data bus and control bus of said computer game machine via connectors, on the other hand, connecting to said TV tuner, said multi-system video signal decoder and converter circuit, said high-speed memory and said control software carrier by the other groups of address buses, data buses and control buses; under the command of said control software, said computer game machine sends instructions to said TV tuner, said multi-system video signal decoder and converter circuit and said high-speed memory via said logic control circuit, first receives TV signal of designated frequency from said TV tuner, then said TV tuner outputs a complete field of video signal towards said multi-system video signal decoder and converter circuit, the video signal as analog and decoder signal received from said TV tuner is converted towards digital signal in a resolution as designated by said software, the digital images data output is stored in advance into said high-speed memory, further, said digital image data is stored into the internal memory of said computer game machine in fast transferring mode , for example, direct memory access, and then at the next field of period when said computer game machine outputs display signal, said digital image data is quickly transferred to the storage area of said computer game machine for display which conventionally cannot conduct high-speed data transmission if not conjuncting with scanning line flying-back, thus achieving the object of renewing contents, at the same time, said TV tuner once again sends a new field of video signal to said multi-system video signal decoder and converter circuit under the control of said software, thus a new run of conversion and transferring will start in a periodic mode, and the content of the TV pictures will display on the screen of said computer game machine; meanwhile, by controlling said audio selector, the TV audio signal will be heard from said loudspeaker and external earphone.

2. A computer game system according to claim 1, **characterized in that** said control software can select the video and audio signal input from said external video and audio input port instead of the video and audio signal output from said TV tuner, thus, the video signal input externally can be seen from the screen of said computer game machine and the audio signal input externally can be heard from said loudspeaker or external earphone.
